# EUROPÄISCHE PATENTSCHRIFT

(11) **EP 1 199 342 B1**
(45) Veröffentlichungstag und Bekanntmachung des Hinweises auf die Patenterteilung: **20.04.2005**
(21) Anmeldenummer: 01123346.7
(22) Anmeldetag: 09.10.2001
(51) Int. Cl.: C09D 167/00, C09D 175/06

(54) **Wasserverdünnbare Lackbindemittel mit hohem Festkörpergehalt**
Waterdilutable lacquer compositions with high solids level
Liant pour peinture diluable dans l'eau à haute teneur en solides

(30) Priorität: 17.10.2000 AT 17802000
(43) Veröffentlichungstag der Anmeldung: 24.04.2002
(73) Patentinhaber: Surface Specialties Austria GmbH, 8402 Werndorf (AT)
(72) Erfinder: Dworak, Gert, Dr., 8010 Graz (AT); Feola, Roland, Dr., 8045 Graz (AT); Gmoser, Johann, 8045 Graz (AT); Staritzbichler, Werner, Dr., 8046 Graz (AT); Kuttler, Ulrike Dr., 8302 Vasoldsberg (AT)
(74) Vertreter: Deckers, Hellmuth, Dr.

(56) Entgegenhaltungen:
- WO-A-93/01245
- WO-A-94/07932
- DE-A- 3 428 204
- PATENT ABSTRACTS OF JAPAN vol. 015, no. 197 (C-0833), 21. Mai 1991 (1991-05-21) & JP 03 052973 A (NIPPON PAINT CO LTD), 7. März 1991 (1991-03-07)

## Beschreibung

Die Erfindung betrifft wasserverdünnbare Lackbindemittel, ein Verfahren zu deren Herstellung und deren Verwendung zur Formulierung von Einbrennlacken, insbesondere von wasserverdünnbaren Füllern für die Automobillackierung.

Aus der DE-A 34 28 204 ist ein Verfahren zur Herstellung von wäßrigen Emulsionen von lufttrocknenden Lackbindemitteln bekannt, bei welchem fettsäuremodifizierte, Säuregruppen enthaltende Alkydharze mit Hydroxylgruppen enthaltenden säurefreien Alkydharzen kondensiert oder durch gemeinsame Umsetzung mit einem Diisocyanat verknüpft werden. Aus der WO 93/01245 ist ein Verfahren zur Herstellung von wasserverdünnbaren Lackbindemitteln und deren Verwendung bekannt, bei dem Polyurethanharze mit Carboxylgruppen und mindestens einer blockierten Isocyanatgruppe mit Hydroxylgruppen tragenden Polyestern kondensiert werden, und gemeinsam mit einer nicht wasserverdünnbaren Vernetzungskomponente zu Lackbindemitteln formuliert werden. Aus der WO 94/07932 schließlich sind wasserverdünnbare Bindemittelzusammensetzungen bekannt, die Kombinationen von wasserverdünnbaren urethanmodifizierten Polyesterharzen mit wäßrigen Polymerisatdispersionen umfassen.

Es ist generell erwünscht, in Lacken den Massenanteil an Bindemitteln (Harzen) und Pigmenten möglichst zu erhöhen, um die Trocknungszeiten zu verkürzen und die zur Trocknung benötigte Energiemenge zu minimieren. Dies ist besonders bei Wasserlacken wegen der hohen Verdampfungsenthalpie von Wasser bedeutsam. Dabei soll jedoch die Viskosität des Lackes in der Applikationsform nicht übermäßig ansteigen, um das Auftragen nicht zu beinträchtigen und den Verlauf des Lackes auf dem Substrat nicht zu behindern. Gebräuchlich sind wäßrige Füller-Lacke, deren Bindemittel wasserverdünnbare Polyurethanund/oder Polyesterharze enthalten. Solche Füllerlacke sind beispielsweise beschrieben in der EP-A 0 517 707, dabei beträgt der Massenanteil an Wasser ca. 45 %.

Überraschenderweise wurde nun gefunden, daß durch Bindemittelkombinationen, die als einen Bestandteil wassermischbare Hydroxyurethane enthalten, sowohl der Festkörper-Massenanteil der betreffenden Bindemittelkombinationen in der Lieferform als auch der Festkörper-Massenanteil im formulierten Lack deutlich angehoben werden kann.

Gegenstand der Erfindung sind daher wäßrige Bindemittelmischungen, enthaltend ein wasserverdünnbares Harz und ein wassermischbares Hydroxyurethan, wobei das wasserverdünnbare Harz ausgewählt ist aus Polyestern, die durch Einbau von Bishydroxyalkylcarbonsäuren oder Polycarbonsäuren, deren Carboxylgruppen unterschiedliche Reaktivität bezüglich der Polykondensation aufweisen, anionisch modifiziert sind, Polyestern, die durch Cokondensation von höherfunktionellen Alkoholen und Säuren mit Funktionalität größer als 2 zugänglich sind, wobei die Säuren im Überschuß eingesetzt werden und Kondensationsprodukten **AB** von allein nicht wasserlöslichen Hydroxylgruppen-haltigen Harzen **B** und wasserlöslichen oder in Wasser dispergierbaren Säuregruppen-haltigen Harzen **A,** wobei die Harze **A** und **B** unabhängig voneinander aus den genannten Gruppen der Polyesterharze, Alkydharze, Polyurethanharze, Polyacrylatharze und Epoxidharze ausgewählt sind.

Wassermischbar im Sinne der vorliegenden Erfindung bedeutet, daß der betreffende Stoff mit Wasser als Zweistoff-Gemisch über den ganzen Konzentrationsbereich einphasige Mischungen bildet.

Wasserverdünnbare Bindemittel sind die bekannten Kunstharze, insbesondere Polyesterharze, Alkydharze, Polyurethanharze, Polyacrylatharze, Keton- und Aldehydharze, Polyamidharze und Epoxidharze, die durch Zusatz von Emulgatoren oder durch chemische Modifizierung hydrophilisiert sind, d. h. in Wasser dispergierbar oder zumindest teilweise wasserlöslich sind und stabile ein- oder mehrphasige Gemische mit Wasser bilden.

Als Emulgatoren lassen sich die bekannten anionischen, kationischen, amphoteren und nichtionischen Stoffe einsetzen, deren lipophile Reste aus linearen und verzweigten (gegebenenfalls ungesättigten) Alkyl-Gruppen, Aryl-und Alkylaryl-Gruppen ausgewählt sind. Als hydrophile Gruppen werden bevorzugt unter den anionischen Carboxylat-, Sulfonat-, Sulfat- Phosphat- und Phosphonat-Gruppen, unter den kationischen quaternäre AmmoniumGruppen oder Aminogruppen, die bei Säurezusatz Ammoniumverbindungen bilden können, unter den amphoteren Strukturelementen im selben Molekül anwesende Ammonium- und Carboxylat-Gruppen, und unter den nichtionischen Polyoxyäthylen-, Polyoxypropylen-, Polyol-, insbesondere Zuckeralkohol-, und Poly- oder Oligo-Saccharid-Gruppen.

Durch chemische Modifizierung werden die Kunstharze hydrophil, indem Stoffe, die die oben genannten hydrophilen Gruppen enthalten, durch geeignete Reaktion chemisch (bei der Synthese) in die Kunstharze eingebaut oder auf die fertigen Harze aufgepfropft werden. Je nach der Natur des Harzes muß Art und Menge des hydrophilisierenden Stoffes gewählt werden. Bevorzugt werden solche Kunstharze, deren Hydrophilie erzeugt wurde durch Einbau von anionischen Gruppen oder solchen Gruppen, die bei Zusatz von Basen in anionische Gruppen überführbar sind. Ein bevorzugtes Beispiel für eine anionische Modifizierung ist der Einbau von Bis(hydroxyalkyl)carbonsäuren wie Dimethylolpropionsäure oder von Polycarbonsäuren, deren Carboxylgruppen unterschiedliche Reaktivität bezüglich der Polykondensation aufweisen, wie Citronensäure oder Trimellithsäure. Soweit Monomere mit Säurefunktionalität bei der Synthese der Harze eingesetzt werden, ist es ebenfalls möglich, durch Mitverwendung von Edukten mit einer Funktionalität größer als 2, verzweigte oder dendritische Molekülstrukturen aufzubauen, wobei an den Enden der Zweige jeweils Säuregruppen stehen sollen. Besonders einfach ist dies beispielsweise bei Polyestern durch Cokondensation von höherfunktionellen Alkoholen oder Säuren (Funktionalität größer als 2) möglich, wobei die Säuren im Überschuß eingesetzt werden müssen. Auf diese Weise lassen sich solche Harze mit einer zur Hydrophilisierung ausreichenden Anzahl von Säuregruppen synthetisieren. Diese anionisch modifizierten hydrophilen Harze enthalten in bevorzugter Weise keine kationischen Gruppen oder Gruppen, die durch Zusatz von Säuren in Wasser Kationen bilden.

Insbesondere geeignet als Bindemittel sind Kondensationsprodukte **AB** von allein nicht wasserlöslichen Hydroxylgruppen-haltigen Harzen **B** und wasserlöslichen oder in Wasser dispergierbaren Säuregruppen-haltigen Harzen **A,** wobei die Harze **A** und **B** unabhängig voneinander aus den genannten Gruppen der Polyesterharze, Alkydharze, Polyurethanharze, Polyacrylatharze und Epoxidharze ausgewählt sind.

Als nicht wasserlöslich werden solche Harze bezeichnet, bei denen nach Durchmischung und Erreichen eines Gleichgewichts mit der 10fachen Masse an Wasser bei Raumtemperatur die wäßrige Phase einen Massenanteil von weniger als 5 % des betreffenden Harzes enthält. Anderenfalls werden die Harze als (teilweise) wasserlöslich oder als wasserdispergierbar bezeichnet.

Das Säuregruppen aufweisende Harz A hat bevorzugt eine Säurezahl von 100 bis 230 mg/g, insbesondere von 70 bis 160 mg/g, und das Hydroxylgruppen aufweisende Harz B bevorzugt eine Hydroxylzahl von 50 bis 500 mg/g, insbesondere von 60 bis 350 mg/g.

Die Säurezahl ist gemäß DIN 53 402 definiert als der Quotient derjenigen Masse *m*_{KOH} an Kaliumhydroxid, die erforderlich ist, um eine zu untersuchende Probe zu neutralisieren, und der Masse *m*_{B} dieser Probe (Masse des Feststoffes in der Probe bei Lösungen oder Dispersionen); ihre übliche Einheit ist "mg/g". Die Hydroxylzahl ist gemäß DIN 53 240 definiert als der Quotient derjenigen Masse *m*_{KOH} an Kaliumhydroxid, die genausoviel Hydroxylgruppen aufweist wie eine zu untersuchende Probe, und der Masse *m*_{B} dieser Probe (Masse des Feststoffes in der Probe bei Lösungen oder Dispersionen); ihre übliche Einheit ist "mg/g".

Die früher so bezeichnete "Grenzviskositätszahl", nach DIN 1342, Teil 2.4, "Staudinger-Index" *J*_{g} genannt, ist der Grenzwert der Staudinger-Funktion *J*ᵥ bei abnehmender Konzentration und Schubspannung, wobei *J*ᵥ die auf die Massenkonzentration β_{B} = *m* _{B} / *V* des gelösten Stoffes B (mit der Masse *m* _{B} des Stoffes im Volumen *V* der Lösung) bezogene relative Viskositätsänderung ist, also *J*ᵥ = (ηᵣ-1)/ β_{B}. Dabei bedeutet ηᵣ - 1 die relative Viskositätsänderung, gemäß der Gleichung ηᵣ - 1 = (η - ηₛ) / η_{s.} Die relative Viskosität ηᵣ ist der Quotient aus der Viskosität η der untersuchten Lösung und der Viskosität ηₛ des reinen Lösungsmittels. (Die physikalische Bedeutung des Staudinger-Index ist die eines spezifischen hydrodynamischen Volumens des solvatisierten Polymerknäuels bei unendlicher Verdünnung und im Ruhezustand.) Die üblicherweise für *J* verwendete Einheit ist "cm³/g"; früher häufig "dl/g".

Die für die Erfindung bevorzugten Kondensationsprodukte **AB** haben bevorzugt eine Säurezahl von 25 bis 75 mg/g, insbesondere 30 bis 50 mg/g. Ihr Staudinger-Index ("Grenzviskositätszahl") beträgt üblicherweise 10 bis 20 cm³/g, insbesondere 12 bis 19 cm³/g, und besonders bevorzugt 13 bis 18 cm³/g. Zu ihrer Herstellung werden die **K**omponenten **A** und **B** bevorzugt in einem Massenverhältnis von 10 zu 90 bis 80 zu 20, insbesondere von 15 zu 85 bis 40 zu 60, eingesetzt.

Die Harze **A** mit Carboxylgruppen werden bevorzugt ausgewählt aus Polyesterharzen **A1**, Polyurethanharzen **A2**, den sogenannten Maleinatölen **A3**, mit ungesättigten Carbonsäuren gepfropften Fettsäuren und Fettsäuregemischen **A4** sowie den Acrylatharzen **A5**. Anstelle von Harzen mit Carboxylgruppen oder in Mischung mit diesen lassen sich auch mit Phosphorsäure bzw. Phosphonsäuren modifizierte Epoxidharze oder derart modifizierte Umsetzungsprodukte von Epoxidharzen mit Fettsäuren einsetzen, gemeinsam als **A6** bezeichnet. Bevorzugt ist die Säurezahl der Harze **A** 100 bis 230 mg/g, insbesondere von 70 bis 160 mg/g. Ihr Staudinger-Index, gemessen in Dimethylformamid als Lösungsmittel bei 20 °C, beträgt im allgemeinen ca. 6,5 bis 12 cm³/g, bevorzugt 8 bis 11 cm³/g.

Geeignete Polyesterharze **A1** lassen sich in bekannter Weise herstellen aus Polyolen **A11** und Polycarbonsäuren **A12**, wobei ein Teil, bevorzugt bis zu 25 %, der Stoffmenge der Polyole und Polycarbonsäuren auch durch Hydroxycarbonsäuren **A13** ersetzt sein kann. Durch geeignete Wahl von Art und Menge der Edukte **A11** und **A12** wird sichergestellt, daß der resultierende Polyester eine ausreichende Zahl von Säuregruppen, entsprechend der oben angegebenen Säurezahl, hat. Die Polyole **A11** werden bevorzugt ausgewählt aus den aliphatischen und cycloaliphatischen Alkoholen mit 2 bis 10 Kohlenstoffatomen und im Mittel mindestens zwei Hydroxylgruppen pro Molekül, insbesondere geeignet sind Glykol, 1,2-und 1,3-Propandiol, 1,4-Butandiol, 1,6-Hexandiol, Neopentylglykol, Di-und Triäthylenglykol, Di- und Tripropylenglykol, Glycerin, Trimethylolpropan und Trimethyloläthan. Geeignete Polycarbonsäuren **A12** sind aliphatische, cycloaliphatische und aromatische Polycarbonsäuren wie Adipinsäure, Bernsteinsäure, Cyclohexandicarbonsäure, Phthalsäure, Iso- und Terephthalsäure, Trimellithsäure, Trimesinsäure und Benzophenontetracarbonsäure. Dabei lassen sich auch Verbindungen einsetzen, die sowohl Carbonsäure- als auch Sulfonsäuregruppen aufweisen, wie zum Beispiel Sulfoisophthalsäure.

Geeignete Polyurethanharze **A2** lassen sich darstellen durch Umsetzung von aliphatischen Polyolen **A21** wie unter **A11** definiert, Hydroxyalkancarbonsäuren **A22** mit mindestens einer, bevorzugt zwei, Hydroxylgruppen und einer unter Veresterungsbedingungen im Vergleich zu Adipinsäure weniger reaktiven Carboxylgruppe, bevorzugt eingesetzt werden Dihydroxymonocarbonsäuren ausgewählt aus Dimethylolessigsäure, Dimethylolbuttersäure und Dimethylolpropionsäure, oligomeren oder polymeren Verbindungen **A25** mit im Mittel mindestens zwei Hydroxylgruppen pro Molekül, die ausgewählt werden können aus Polyätherpolyolen **A251,** Polyesterpolyolen **A252,** Polycarbonatpolyolen **A253,** gesättigten und ungesättigten Dihydroxyaliphaten **A254,** die durch Oligomerisieren oder Polymerisieren von Dienen mit 4 bis 12 Kohlenstoffatomen, insbesondere Butadien, Isopren und Dimethylbutadien und anschließendes Funktionalisieren in bekannter Weise erhältlich sind, sowie mehrfunktionellen Isocyanaten **A23,** bevorzugt ausgewählt aus aromatischen, cycloaliphatischen sowie linearen und verzweigten aliphatischen difunktionellen Isocyanaten wie Toluylendiisocyanat, Bis(4-isocyanatophenyl)methan, Tetramethylxylylendiisocyanat, Isophorondiisocyanat, Bis(4-isocyanatocyclohexyl)methan, Hexamethylendiisocyanat und 1,6-Diisocyanato-3,3,5- und -3,5,5-trimethylhexan.

Besonders bevorzugt werden solche Polyurethanharze **A2**, die durch Umsetzung einer Mischung von einem oder mehreren Polyolen **A21** mit einer Hydroxyalkancarbonsäure **A22** und mindestens einem mehrfunktionellen Isocyanat **A23,** das mit Monohydroxyverbindungen **A24** ausgewählt aus Polyalkylenglykol-Monoalkyläthern HO-(R¹-O)ₙ-R², wobei R¹ ein linearer oder verzweigter Alkylenrest mit 2 bis 6, bevorzugt 2 bis 4 Kohlenstoffatomen ist, und R² eine Alkylgruppe mit 1 bis 8, bevorzugt 2 bis 6 Kohlenstoffatomen ist, und/oder Oximen von aliphatischen Ketonen mit 3 bis 9 Kohlenstoffatomen zumindest teilweise, üblicherweise zu mehr als 20 %, bevorzugt zu mehr als 35 %, und insbesondere zu 50 % und mehr blockiert ist. Der Blockierungsgrad wird hier angegeben als Quotient der Anzahl der blockierten Isocyanatgruppen und der Anzahl der in dem Isocyanat **A23** insgesamt vorhandenen (blockierten und unblockierten) Isocyanatgruppen. Es ist weiter bevorzugt, die Polyurethanharze **A2** derart herzustellen, daß eine Mischung eines mehrfunktionellen Isocyanats und eines auf die oben beschriebene Weise blockierten mehrfunktionellen Isocyanats mit der Hydroxyalkancarbonsäure **A22** und den Polyolen **A21** und **A25** umgesetzt werden, wobei die Mischungsverhältnisse bevorzugt so gewählt werden, daß in jedem Molekül des Polyurethans **A2** im Mittel eine oder mehr als eine endständige blockierte Isocyanatgruppe vorliegt.

Als "Maleinatöl" **A3** werden Umsetzungsprodukte von (trocknenden) Ölen **A31** und olefinisch ungesättigten Carbonsäuren **A32**, besonders Dicarbonsäuren bezeichnet. Als Öle **A31** werden bevorzugt trocknende und halbtrocknende Öle wie Leinöl, Tallöl, Rapsöl, Sonnenblumenöl und Baumwollsaatöl eingesetzt, mit Jodzahlen von ca. 100 bis ca.180 cg/g. Die ungesättigten Carbonsäuren **A32** werden so ausgewählt, daß sie unter den üblichen Bedingungen radikalisch (nach Zusatz von Initiatoren oder nach Erwärmen) auf die vorgelegten Öle mit einer Ausbeute (Anteil der nach der Reaktion mit dem Öl verbundenen ungesättigten Carbonsäuren, bezogen auf die zur Reaktion eingesetzte Menge) von über 50 % pfropfen. Besonders geeignet ist Maleinsäure in Form ihres Anhydrids, ferner Tetrahydrophthalsäureanhydrid, Acryl-und Methacrylsäure, sowie Citracon-, Mesacon-und Itaconsäure.

Ebenfalls geeignete Harze **A4** sind mit den unter **A32** genannten ungesättigten Säuren gepfropfte Fettsäuren oder Fettsäuregemische **A41**, wobei die letzteren durch Verseifen von Fetten in technischen Mengen zugänglich sind. Die geeigneten Fettsäuren weisen mindestens eine olefinische Doppelbindung im Molekül auf, beispielhaft werden Ölsäure, Linol- und Linolensäure, Ricinolsäure und Elaidinsäure sowie die genannten technischen Gemische solcher Säuren aufgezählt.

Weitere geeignete Harze **A5** sind die durch Copolymerisation von olefinisch ungesättigten Carbonsäuren **A51** und anderen Vinyl- oder Acryl-Monomeren **A52** zugänglichen sauren Acrylatharze. Die Carbonsäuren sind die bereits unter **A32** genannten, ebenso noch Vinylessigsäure sowie Croton- und Isocrotonsäure und die Halbester von olefinisch ungesättigten Dicarbonsäuren wie z. B. Monomethylmaleinat und -fumarat. Geeignete Monomere **A52** sind die Alkylester von Acryl- und Methacrylsäure mit bevorzugt 1 bis 8 Kohlenstoffatomen in der Alkylgruppe, (Meth)Acrylnitril, Hydroxyalkyl(meth)acrylate mit 2 bis 6 Kohlenstoffatomen in der Alkylgruppe, Styrol, Vinyltoluol, sowie Vinylester von aliphatischen linearen und verzweigten Carbonsäuren mit 2 bis 15 Kohlenstoffatomen, insbesondere Vinylacetat und der Vinylester eines Gemisches von verzweigten aliphatischen Carbonsäuren mit im Mittel 9 bis 11 Kohlenstoffatomen. Vorteilhaft ist auch die Copolymerisation der unter **A51** und **A52** genannten Monomeren in Gegenwart von solchen Verbindungen **A53**, die mit den ungesättigten Carbonsäuren unter Addition und Bildung einer Carboxyl- oder Hydroxylfunktionellen copolymerisierbaren Verbindung reagieren. Derartige Verbindungen sind beispielsweise Lactone A531, die mit den Carbonsäuren A51 unter Ringöffnung zu einer Carboxyl-funktionellen ungesättigten Verbindung reagieren, und Epoxide **A532**, insbesondere Glycidylester von in α-Stellung verzweigten gesättigten aliphatischen Säuren mit 5 bis 12 Kohlenstoffatomen wie der Neodecansäure oder der Neopentansäure, die unter Addition mit der Säure **A51** zu einer copolymerisierbaren Verbindung mit einer Hydroxylgruppe reagieren. Dabei sind die Stoffmengen der eingesetzten Verbindungen so zu bemessen, daß die geforderte Säurezahl erreicht wird. Legt man diese Verbindung **A53** vor und führt die Polymerisation so durch, daß diese Verbindung als (alleiniges) Lösungsmittel verwendet wird, so erhält man lösungsmittelfreie Acrylatharze.

Die mit Phosphorsäure oder Phosphonsäuren modifizierten Epoxidharze oder Addukte von Epoxidharzen und Fettsäuren **A6** werden hergestellt durch Umsetzung vorzugsweise in einem Lösungsmittel von Phosphorsäure oder organischen Phosphonsäuren, die mindestens zweibasig sind, mit Epoxidharzen oder Addukten von Epoxidharzen und Fettsäuren. Dabei wird die Stoffmenge der eingesetzten Phosphor- oder Phosphonsäure üblicherweise so bemessen, daß sämtliche Epoxidgruppen durch die Umsetzung mit der Säure verbraucht werden, und daß eine ausreichende Anzahl von Säuregruppen auch nach der Reaktion noch zur Verfügung steht. Das entstandene Harz weist Hydroxylgruppen (aus der Reaktion der Oxirangruppe mit der Säurefunktion) auf, wobei diese Hydroxylgruppen in β-Stellung zur Estergruppierung stehen, sowie Säuregruppen der Phosphor- bzw. Phosphonsäure, die nicht durch die Umsetzung mit dem Epoxid verbraucht wurden. Geeignete Phosphor- oder Phosphonsäuren sind z. B. ortho-Phosphorsäure H₃PO₄, phosphorige Säure H₃PO₃, Alkanphosphonsäuren mit 1 bis 18, insbesondere 1 bis 12 Kohlenstoffatomen im Alkylrest wie Methan- und Äthanphosphonsäure, sowie Phenylphosphonsäure.

Als Hydroxylgruppen-haltige Harze **B** sind insbesondere Polyester **B1,** Acrylatharze **B2,** Polyurethanharze **B3** sowie Epoxidharze **B4** geeignet. Die Hydroxylzahl der Harze B beträgt im allgemeinen ca. 50 bis 500 mg/g, vorzugsweise ca. 60 bis 350 mg/g, und besonders bevorzugt 70 bis 300 mg/g. Ihr Staudinger-Index, gemessen bei 20 °C in Dimethylformamid als Lösungsmittel, beträgt bevorzugt 8 bis 13 cm³/g, insbesondere 9,5 bis 12 cm³/g.

Die Polyester **B1** werden wie die Komponente **A1** durch Polykondensation hergestellt; lediglich ist hier. Art und Menge der Edukte so zu wählen, daß ein Überschuß an Hydroxylgruppen gegenüber den Säuregruppen besteht, wobei das Kondensationsprodukt die oben angegebene Hydroxylzahl aufweisen muß. Dies kann erreicht werden, indem mehrwertige Alkohole mit im Mittel mindestens zwei, bevorzugt mindestens 2,1 Hydroxylgruppen pro Molekül, mit Dicarbonsäuren oder einem Gemisch von Poly- und Monocarbonsäuren mit im Mittel maximal zwei, bevorzugt 1,5 bis 1,95 Säuregruppen pro Molekül eingesetzt werden. Eine andere Möglichkeit ist, einen entsprechenden Überschuß an Hydroxylkomponenten (Polyolen) **B11** gegenüber den Säuren **B12** einzusetzen. Die Polyole **B11** und die mehrfunktionellen Säuren **B12**, die in der Polykondensationsreaktion zu den Hydroxylgruppen-haltigen Polyestern **B1** umgesetzt werden, werden aus den gleichen Gruppen wie die Polyole **A11** und die Säuren **A12** ausgewählt. Es ist hier ebenso möglich, einen Teil der Polyole und Säuren durch Hydroxysäuren entsprechend **A13** zu ersetzen. Es wird dabei angestrebt, daß die Säurezahl der Komponente **B** nicht über 20 mg/g, bevorzugt unter 18 mg/g, liegt. Die Säurezahl läßt sich beispielsweise dadurch herabsetzen, daß der fertig kondensierte Polyester **B1** mit einer geringen Menge einwertiger aliphatischer Alkohole **A14** unter Veresterungsbedingungen nachreagiert wird. Dabei ist die Menge an Alkoholen **A14** so zu bemessen, daß zwar die Säurezahl unter den Grenzwert abgesenkt wird, jedoch der Staudinger-Index nicht unter die genannte untere Grenze absinkt. Geeignete aliphatische Alkohole sind beispielsweise n-Hexanol, 2-Äthylhexanol, Isodecylalkohol und Tridecylalkohol.

Die Hydroxylgruppen-haltigen Acrylatharze **B2** sind zugänglich durch üblicherweise radikalisch initiierte Copolymerisation von Hydroxylgruppen-haltigen Acrylmonomeren **B21** mit anderen Vinyl- oder Acrylmonomeren **B22** ohne solche Funktionalität. Beispiele für die Monomeren **B21** sind Ester der Acryl- und Methacrylsäure mit aliphatischen Polyolen, insbesondere Diolen mit 2 bis 10 Kohlenstoffatomen, wie Hydroxyäthyl- und Hydroxypropyl-(meth)acrylat. Beispiele für die Monomeren **B22** sind die Alkylester der (Meth)acrylsäure mit 1 bis 10 Kohlenstoffatomen in der Alkylgruppe wie Methyl-, Äthyl-, n-Butyl- und 2-Äthylhexyl(meth)acrylat, (Meth)Acrylnitril, Styrol, Vinyltoluol, Vinylester von aliphatischen Monocarbonsäuren mit 1 bis 10 Kohlenstoffatomen wie Vinylacetat und Vinylpropionat. Bevorzugt werden auch solche Acrylatharze, die nicht wie üblich in Lösung, sondern in einer Substanzpolymerisation hergestellt werden, wobei eine flüssige cyclische Verbindung vorgelegt wird, die als Lösungsmittel bei der Polymerisationsreaktion fungiert, und die durch Ringöffnung bei der Reaktion mit einem der eingesetzten Monomeren eine copolymerisierbare Verbindung bildet. Beispiele für solche Verbindungen sind Glycidylester von in α-Stellung verzweigten aliphatischen Monocarbonsäuren, insbesondere der als Neopentansäure oder Neodecansäure kommerziell erhältlichen Säuren bzw. Säuregemische, weiter Lactone wie ∈-Caprolacton oder δ-Valerolacton. Werden diese Glycidylester eingesetzt, so ist es erforderlich, mindestens einen zur Stoffmenge der Epoxidgruppen äquimolaren Anteil an Säuregruppen-haltigen Comonomeren, wie (Meth)Acrylsäure, bei der Polymerisation einzusetzen. Die Lactone können unter Ringöffnung sowohl mit Hydroxylgruppen-haltigen als auch mit Säuregruppen-haltigen Comonomeren eingesetzt werden.

Hydroxylgruppen-haltige Polyurethanharze **B3** sind in bekannter Weise zugänglich durch Addition von oligomeren oder polymeren Polyolen **B31,** ausgewählt aus Polyesterpolyolen, Polyätherpolyolen, Polycarbonatpolyolen und Polyolefinpolyolen, gegebenenfalls niedermolekularen aliphatischen Diolen oder Polyolen **B33** mit 2 bis 12 Kohlenstoffatomen, wie beispielsweise Äthylenglykol, 1,2-und 1,3-Propylenglykol, 1,4-Butandiol, 1,6-Hexandiol, DiundTri-Äthylen-bzw. Propylenglykol, Neopentylglykol, Trimethylolpropan, Pentaerythrit, und mehrfunktionellen Isocyanaten **B32,** wobei die letzteren in stöchiometrischem Unterschuß eingesetzt werden, derart daß die Anzahl der Hydroxylgruppen in der Reaktionsmischung größer ist als die der Isocyanatgruppen. Geeignete Polyole sind insbesondere oligomere und polymere Dihydroxyverbindungen mit einer zahlenmittleren molaren Masse Mₙ von ca. 200 bis 10000 g/mol. Durch Polyaddition mit mehrfunktionellen, insbesondere difunktionellen Isocyanaten werden sie bis zu dem angestrebten Wert für den Staudinger-Index von mindestens 8 cm³/g, vorzugsweise mindestens 9,5 cm³/g aufgebaut.

Epoxidharze **B4,** die durch Reaktion von Epichlorhydrin mit aliphatischen oder aromatischen Diolen oder Polyolen, insbesondere Bisphenol A, Bisphenol F, Resorcin, Novolaken oder oligomeren Polyoxyalkylenglykolen mit 2 bis 4, bevorzugt 3 Kohlenstoffatomen in der Alkylengruppe, zugänglich sind, weisen je eingesetztem Epichlorhydrin-Molekül mindestens eine Hydroxylgruppe auf. Anstelle der Reaktion von Epichlorhydrin mit Diolen lassen sich die geeigneten Epoxidharze auch durch die sogenannte Advancement-Reaktion aus Diglycidyläthern von Diolen (wie den oben genannten) oder Diglycidylestern von zweibasigen organischen Säuren mit den genannten Diolen herstellen. Alle bekannten Epoxidharze lassen sich hier einsetzen, soweit sie der Bedingung für die Hydroxylzahl genügen.

Die wassermischbaren Hydroxyurethane **C** enthalten mindestens eine Hydroxylgruppe und mindestens eine Urethangruppe, bevorzugt mindestens zwei Hydroxylgruppen und mindestens zwei Urethangruppen. Die Hydroxyurethane **C** lassen sich herstellen durch Umsetzung von primären linearen, verzweigten oder cyclischen Aminen mit cyclischen aliphatischen Carbonaten. Die Amine weisen mindestens eine, bevorzugt mindestens zwei primäre Aminogruppen auf. Sie können auch weitere sekundäre oder tertiäre Aminogruppen oder Äthergruppen enthalten. Besonders bevorzugt sind aliphatische lineare, verzweigte oder cyclische primäre Diamine mit 2 bis 18, bevorzugt 3 bis 12 Kohlenstoffatomen. Ebenfalls bevorzugt sind Oligo(oxyalkylen)diamine gemäß der Formel
H₂N-(R-O)ₙ-R-NH₂, wobei R ein Äthylen- oder 1,2- oder 1,3-Propylen-Radikal oder Mischungen dieser Radikale bedeuten kann, und n eine Zahl von 1 bis 20 ist. Die cyclischen Carbonate sind bevorzugt Monocarbonate, also Ester der Kohlensäure mit Glykol, 1,2- und 1,3-Propandiol und Neopentylglykol. Man kann diese Hydroxyurethane auch durch Umsetzung von entsprechenden linearen, verzweigten oder cyclischen aliphatischen Isocyanaten mit aliphatischen Diolen mit 2 bis 6 Kohlenstoffatomen, bevorzugt Glykol, 1,2-und 1,3-Propandiol und Neopentylglykol darstellen. Es ist auch möglich, Biscyclocarbonate einzusetzen, die beispielsweise durch Umsetzen von Oligomeren des Propylenglykols mit Epichlorhydrin und anschließende Umsetzung mit Kohlendioxid zum Biscyclocarbonat erhältlich sind. Es lassen sich auch Hydroxyurethane durch Mischen der genannten Carbonate mit den genannten Aminen herstellen.

Die Hydroxyurethane werden in solchen Mengen eingesetzt, daß die Bindemittelmischung aus den wasserverdünnbaren Harzen und den Hydroxyurethanen Massenanteile von 5 bis 50 % der Hydroxyurethane und 95 bis 50 % der wasserverdünnbaren Harze (jeweils bezogen auf den Feststoffanteil der Bindemittelmischung) enthält. Bevorzugt sind die Massenanteile 10 bis 40 % für das Hydroxyurethan und 90 bis 60 % für das wasserverdünnbare Harz, insbesondere 15 bis 35 % und 85 bis 65 %.

Die erfindungsgemäßen Bindemittelkombinationen lassen sich zur Formulierung von beliebigen wäßrigen Lacken und Beschichtungsmitteln einsetzen. Insbesondere geeignet sind sie zur Formulierung von Einbrennlacken, die solche Härter enthalten, die erst bei erhöhter Temperatur (bevorzugt über 80 °C, insbesondere über 100 °C) wirksam werden. Solche Härter sind beispielsweise die bekannten Aminoplastharze, insbesondere Melaminharze, und blockierte Isocyanate. Einbrennlacke auf Basis der erfindungsgemäßen Bindemittelkombinationen lassen sich mit besonderem Vorteil für wäßrige Füller in der Automobil-Lackierung einsetzen. Diese Füllerlacke enthalten weiter Pigmente, und bestimmte Additive wie Korrosionsschutzmittel, Verlaufsmittel, Antiabsetzmittel, Haftverbesserer und Entschäumer. Neben der Erhöhung des Festkörper-Massenanteils wurde überraschenderweise gefunden, daß die erfindungsgemäßen Bindemittelkombinationen zu Füllerlacken verarbeitet werden können, die Beschichtungen mit höherer Resistenz gegen Steinschlag ergeben.

### Beispiele

Die Beispiele erläutern die Erfindung, ohne sie in ihrem Umfang zu beschränken. Alle Angaben mit der Einheit "%" beziehen sich auf Massenanteile und bedeuten "cg/g" oder "g/(100 g)", mit Ausnahme des Neutralisationsgrades, bei dem der Stoffmengeanteil der neutralisierten Säuregruppen, bezogen auf die Summe der Stoffmengen von neutralisierten und nicht neutralisierten Säuregruppen in "%" ("cmol/mol" oder "mol/100 mol") angegeben wird.

Unter "einwandfrei wasserverdünnbar" oder "unbegrenzt wasserverdünnbar" wird hier verstanden, daß bei der allmählichen Zugabe von Wasser (bis zum ca. 10fachen der Masse der eingesetzten Harzlösung) zur Harzlösung unter Rühren keine Trübung oder Entmischung beobachtet wurde.

In den Beispielen wurden folgende Abkürzungen verwendet:
- DGM: Diäthylenglykoldimethyläther
- MIBK: Methylisobutylketon
- TDI: Toluylendiisocyanat (handelsübliches Isomerengemisch mit ca. 80 % 2,4-TDI und ca. 20 % 2,6-TDI)

Die Jodzahl ist gemäß DIN 53 241-1 definiert als der Quotient derjenigen Masse *m*_{I} an Jod, die unter Entfärbung an die olefinischen Doppelbindungen einer zu untersuchenden Probe addiert wird, und der Masse *m*_{B} dieser Probe (Masse des Feststoffes in der Probe bei Lösungen oder Dispersionen); ihre übliche Einheit ist "g/(100 g)" oder "cg/g".

### Herstellung der Polycarboxylkomponenten

### Wasserverdünnbares Polyurethan (AI):

In einem geeigneten Reaktionsgefäß wurde eine Lösung von 810 g (6 mol) Dimethylolpropionsäure in 946 g DGM und 526 g MIBK vorgelegt. Innerhalb von 4 Stunden wurde zu dieser Lösung bei 100 °C eine Mischung aus 870 g (5 mol) TDI und 528 g (2 mol) eines mit Äthylenglykolmonoäthyläther halbblockierten TDI gleichzeitig zugegeben. Sobald alle NCO-Gruppen umgesetzt waren, wurde der Ansatz mit einer Mischung aus DGM und MIBK (Massenverhältnis 2:1) auf einen Festkörper-Massenanteil von 60 % verdünnt. Die Komponente (A1) wies eine Säurezahl von 140 mg/g und einen Staudinger-Index ("Grenzviskositätszahl"), gemessen in N,N-Dimethylformamid (DMF) bei 20 °C, von 9,3 cm³/g auf.

Das halbblockierte TDI wurde durch Zugabe von 90 g (1 mol) Äthylenglykolmonoäthyläther zu 174 g (1 mol) TDI innerhalb von 2 Stunden bei 30 °C und anschließender Reaktion bis zu einem Massenanteil an unreagierten Isocyanatgruppen in der Mischung ("NCO-Wert") von 16 bis 17 % hergestellt.

### Wasserverdünnbares Polyurethan (AII):

In gleicher Weise wie bei (AI) wurden 945 g (7 mol) Dimethylolpropionsäure in 1079 g DGM und 599 g MIBK mit 1044 g (6 mol) TDI und 528 g (2 mol) eines mit Äthylenglykolmonoäthyläther halbblockierten TDI reagiert. Die Komponente (AII) weist einen Festkörper-Massenanteil von 60 %, eine Säurezahl von 140 mg/g und einen Staudinger-Index, gemessen in N,N-Dimethylformamid (DMF) bei 20 °C, von 10,2 cm³/g auf.

### Wasserverdünnbarer Polyester (AIII)

In einen 3-Halskolben ausgestattet mit Rührer und Rückflußkühler wurden 140 g (1,3 mol) Diäthylenglykol und 152 g (1,1 mol) Trimethylolpropan eingewogen. Unter Rühren und Inertgas wurde die Mischung auf 100 °C erwärmt und bei dieser Temperatur portionsweise 109 g (0,6 mol) Isophthalsäure, 96 g (0,6 mol) Adipinsäure und zuletzt 198 g (1,3 mol) Phthalsäureanhydrid zugegeben. Unter Ausnutzung der auftretenden Exothermie wurde die Temperatur auf 130 °C erhöht.

Nachdem bei 130 °C 2 Stunden gehalten wurde, wurde langsam auf 180 °C erwärmt und unter Abtrennung des jetzt anfallenden Reaktionswassers bis zu einer Säurezahl von 50 mg/g verestert.

Nach Erreichen der Säurezahl wurde mit Butylglykol auf einen Festkörper-Massenanteil von 60 % verdünnt und zuletzt durch Zugabe von 14 g (0,16 mol) N,N-Dimethyläthanolamin neutralisiert.

Das so erhaltene Produkt war unbegrenzt wasserverdünnbar.

### Herstellung der Polyhydroxylkomponenten

### Polyester (BI):

In einem geeigneten Reaktionsgefäß wurden 130 g (1,1 mol) Hexandiol-1,6, 82 g (0,6 mol) Pentaerythrit, 8 g (0,05 mol) Isononansäure, 28 g (0,1 mol) Rizinenfettsäure (dehydratisierte Rizinusölfettsäure) und 50 g (0,3 mol) Isophthalsäure bei 210 °C bis zu einer Säurezahl von weniger als 4 mg/g verestert. Die Viskosität einer 50%igen Lösung in Äthylenglykolmonobutyläther, gemessen als Auslaufzeit nach DIN 53211 bei 20 °C, betrug 125 Sekunden, der Staudinger-Index, gemessen in N,N-Dimethylformamid bei 20 °C, betrug 9,8 cm³/g.

### Polyester (BII):

In gleicher Weise wie bei (BI) wurden 38 g (0,2 Mol) Tripropylenglykol, 125 g (1,2 Mol) Neopentylglykol, 28 g (0,1 Mol) isomerisierte Linolsäure, 83 g (0,5 Mol) Isophthalsäure und 58 g (0,3 Mol) Trimellithsäureanhydrid bei 230 °C bis zu einer Säurezahl von weniger als 4 mg/g verestert. Die Viskosität einer 50%igen Lösung in Äthylenglykolmonobutyläther, gemessen als Auslaufzeit nach DIN 53211 bei 20 °C betrug 165 Sekunden. Der Staudinger-Index, gemessen in N,N-Dimethylformamid bei 20 °C, betrug 10,5 cm³/g.

### Herstellung der Bindemittelkomponenten (AB)

Entsprechend den in Tabelle 1 angegebenen Massenverhältnissen wurden die Polycarboxylkomponenten (A) und die Polyhydroxylkomponenten (B) miteinander gemischt und das vorhandene Lösemittel während des Aufheizens auf eine Reaktionstemperatur von 160 °C unter Vakuum weitgehend entfernt. Diese Temperatur wurde gehalten, bis die gewünschte Säurezahl erreicht worden war, wobei eine Probe nach Neutralisation mit Dimethyläthanolamin einwandfrei wasserverdünnbar war. 70 g des auf diese Weise erhaltenen Kondensates wurden bei 90 °C mit jeweils 30 g eines Dihydroxyurethans C gemischt, mit der entsprechenden Menge an Dimethyläthanolamin auf einen Neutralisationsgrad von 80 % (bezogen auf die jeweils vorhandenen Säuregruppen) neutralisiert und nach 30 Minuten Homogenisierungszeit portionsweise mit Wasser auf eine Viskosität von unter 3000 mPa·s bei 23 °C verdünnt.

Beim Vergleichsbeispiel wurden statt des Dihydroxyurethans 30 Teile eines niedermolekularen Hydroxylgruppen-haltigen Polyesters (PE) zugemischt.

Bei der Nullprobe wurde das Kondensat aus der Polycarboxylkomponente (A) und der Polyhydroxylkomponente (B) ohne weitere Modifikation wie oben angegeben neutralisiert und mit Wasser verdünnt.

### Herstellung der Dihydroxyurethane als Zumischharze (C)

In einen 3-Halskolben ausgestattet mit Rührer und Rückflußkühler wurden 116 g (1,0 mol) 2-Methyl-1,5-pentandiamin gefüllt und bei 30 °C unter Rühren innerhalb 1 Stunde 204 g (2 mol) Propylencarbonat zugegeben. Während der Zugabe ließ man die Temperatur des Ansatzes durch Exothermie auf 60 °C ansteigen und hielt weiter bei dieser Temperatur (zeitweises Kühlen erforderlich). Nach Ende der Zugabe wurde auf 120 °C erwärmt und so lange bei dieser Temperatur gehalten, bis eine Aminzahl von unter 5 mg/g erreicht war. Die Aminzahl ist gemäß DIN 53 176 definiert als der Quotient derjenigen Masse *m*_{KOH} an Kaliumhydroxid, die genausoviel Säure zur Neutralisation verbraucht wie eine zu untersuchende Probe, und der Masse *m*_{B} dieser Probe (Masse des Feststoffes in der Probe bei Lösungen oder Dispersionen); ihre übliche Einheit ist "mg/g". Man erhielt ein unbegrenzt wasserverdünnbares Produkt mit einer Grenzviskositätszahl (gemessen in DMF bei 23 °C) von 3,9 ml/g.

Als "unbegrenzt wasserverdünnbar" oder "unbegrenzt wassermischbar" wird eine Verbindung bezeichnet, die mit Wasser keine Mischungslücke aufweist und nach 24 Stunden Lagerung bei Raumtemperatur (23 °C) keine makroskopische Entmischung zeigt. Als "teilweise wasserverdünnbar" werden solche Verbindungen bezeichnet, die in einem Zweistoffsystem mit Wasser zwar eine Mischungslücke aufweisen, erkennbar an einem deutlichen Tyndall-Effekt, aber bis zu Konzentrationen von 20 % (20 g der betreffenden Verbindung mit 80 g Wasser) einphasige Mischungen bilden.

Analog zu der oben beschriebenen Durchführung wurden weitere Dihydroxyurethane hergestellt (siehe Tabelle 1).

### Verwendete Abkürzungen

- DH: 1,6 - Diaminohexan (molare Masse : 116 g/mol)
- DMP: 1,5- Diamino-2-methylpentan (molare Masse : 116 g/mol)
- D230: Jeffamine D230® (Fa. Huntsman) (molare Masse : 230 g/mol)
- DCH: 1,2- Diaminocyclohexan (molare Masse : 114 g/mol)
- DP: 1,3 - Diaminopentan (molare Masse : 102 g/mol)
- EC: Äthylencarbonat (molare Masse : 88 g/mol)
- PC: Propylencarbonat (molare Masse : 102 g/mol)

**Tabelle 1**

| Zumischharz | Amin Art \| Stoffmenge \| Masse | Carbonat Art \| Stoffmenge \| Masse | Staudinger-Index cm³/g | Wasserverdünnbarkeit |
|---|---|---|---|---|
| C 2 | DMP \| 1 mol \| 116 g | PC \| 2 mol \| 204 g | 3,9 | vollständig |
| C 3 | D230 \| 1 mol \| 230 g | PC \| 2 mol \| 204 g | 3,8 | vollständig |
| C 4 | DCH \| 1 mol \| 114 g | PC \| 2 mol \| 204 g | 3,5 | vollständig |
| C 7 | D230 \| 0,5 mol \| 230 g DCH \| 0,5 mol \| 114 g | EC \| 2 mol \| 176 g | 3,8 | vollständig |
| C 8 | DMP \| 1 mol \| 116 g | EC \| 2 mol \| 176 g | 4,1 | vollständig |
| C 5 | DP \| 1 mol \| 102 g | PC \| 2 mol \| 204 g | 4,0 | teilweise |
| C 1 | DH \| 1 mol \| 116 g | PC \| 2 mol \| 204 g | 4,2 | teilweise |
| C 6 | DH \| 1 mol \| 116 g | PC \| 1 mol \| 102 g EC \| 1 mol \| 88 g | 4,5 | teilweise |

### Polyester PE (Vergleichsbeispiel)

In einen 3-Halskolben ausgestattet mit Rührer und Rückflußkühler wurden 150 g (1,0 mol) Triäthylenglykol gefüllt und unter Inertgas auf 120 °C erwärmt. Dann wurden 148 g (1,0 mol) Phthalsäureanhydrid zugefügt und die Temperatur unter Ausnutzung der auftretenden Exothermie auf 150 °C erhöht. Nach Erreichen einer Säurezahl von 180 mg/g wurden 134 g (1,0 mol) Trimethylolpropan zugegeben, der Ansatz langsam auf 220 °C erhitzt, mit Xylol ein Destillationskreislauf eingestellt und unter Abtrennung des anfallenden Reaktionswassers so lange verestert, bis eine Säurezahl von unter 5 mg/g erreicht war. Zuletzt wurde das Kreislaufmittel durch Destillation unter vermindertem Druck abgezogen.

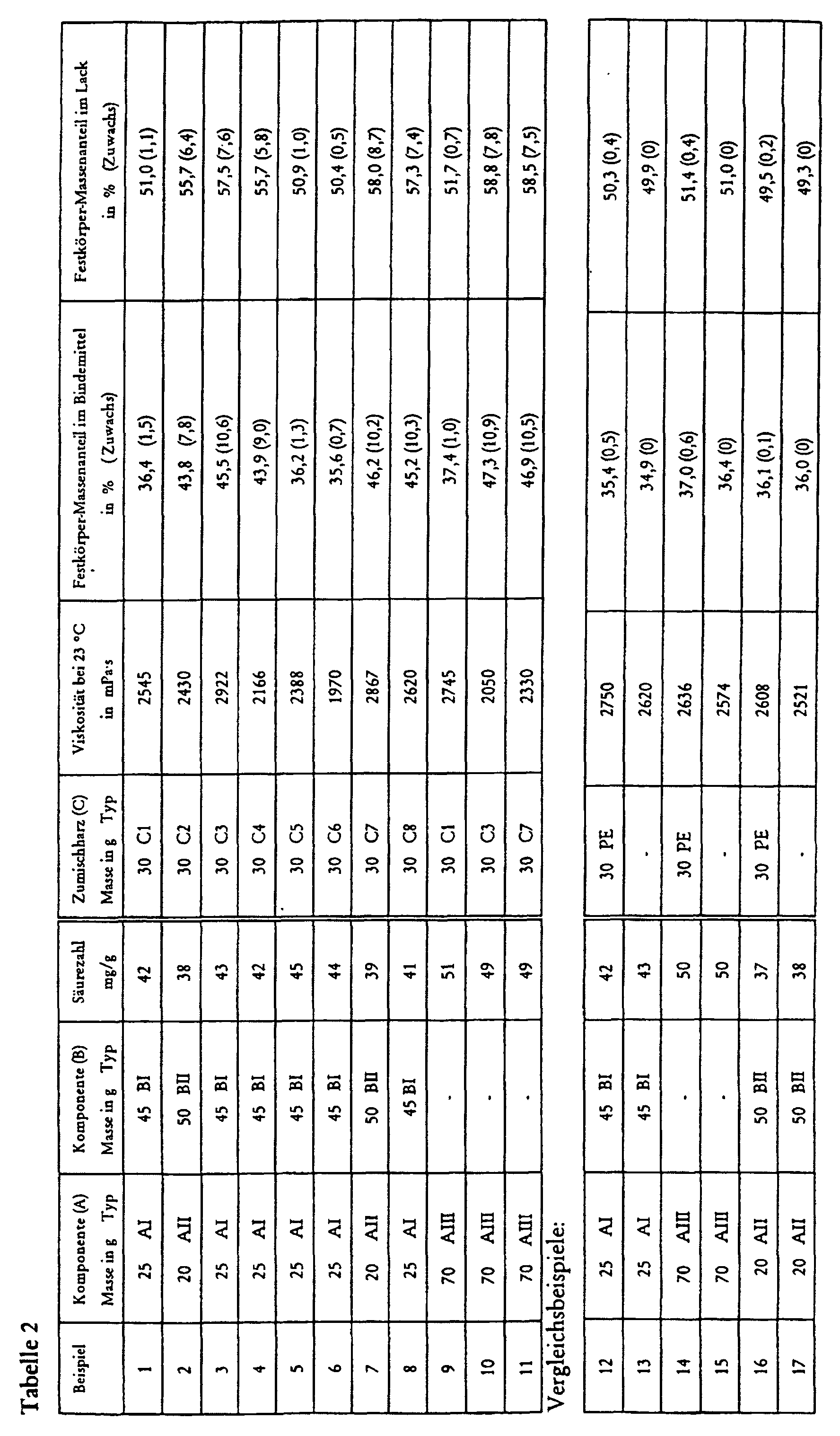

### Lacktechnische Prüfung der erfindungsgemäßen Bindemittel als Automobilfüller

Die Bindemittel entsprechend den Beispielen 1 bis 17 wurden als wäßrige Automobilfüllerlacke gemäß den in der Tabelle 3 angegebene Rezepturen formuliert. Die Lacke wurden jeweils auf eine Viskosität von 120 mPa·s (1,2 Poise) durch Zugabe von Wasser eingestellt, mit einem 150 µm-Rakel auf gereinigte Glasplatten appliziert und anschließend 20 Minuten bei 165 °C eingebrannt.

**Tabelle 3**

| **Füllerlacke** | | | | | | | |
|---|---|---|---|---|---|---|---|
| Lack | | 1 | 2 | 3 | 4 | 5 | 6 |
| Masse BM 3 - | in g | 197,8 | | | | | |
| Masse BM 7 | in g | | 194,8 | | | | |
| Masse BM 10 | in g | | | 190,3 | | | |
| Masse BM 13 (Vergl.) | in g | | | | 257,9 | | |
| Masse BM 17 (Vergl.) | in g | | | | | 250,0 | |
| Masse BM 15 (Vergl.) | in g | | | | | | 247,2 |
| Netzmittel ¹ | in g | 1,2 | 1,2 | 1,2 | 1,2 | 1,2 | 1,2 |
| Wasser ² | in g | 24 | 25 | 22 | 6 | 4 | 6 |
| Titandioxid | in g | 60 | 60 | 60 | 60 | 60 | 60 |
| Füllstoff ³ | in g | 60 | 60 | 60 | 60 | 60 | 60 |
| MH ⁴ | in g | 30 | 30 | 30 | 30 | 30 | 30 |
| Beschleuniger ⁵ | in g | 0,6 | 0,6 | 0,6 | 0,6 | 0,6 | 0,6 |
| Wasser ⁶ | in g | 43,8 | 42,2 | 44,1 | 65,3 | 81,0 | 65,6 |
| Masse des Lacks | in g | 417,4 | 413,8 | 408,2 | 481,0 | 486,8 | 470,6 |
| Festkörper-Massenanteil | in % | 57,5 | 58,0 | 58,8 | 49,9 | 49,3 | 51,0 |
| Lacktechnische Prüfung | | | | | | | |
| Aussehen des gehärteten Films | | störungsfrei | | | | | |
| Trockenfilmdicke | in µm | 35 | 37 | 35 | 34 | 33 | 36 |
| Pendelhärte ⁷ | in s | 127 | 117 | 113 | 138 | 133 | 129 |

Erläuterungen:
- 1: Netzmittel ist ®Surfynol 104 E (Air Products)
- 2: entionisiertes Wasser
- 3: Füllstoff ist Bariumsulfat (Blanc fixe super F, Fa. Sachtleben)
- 4: Melamin-Härter (® Maprenal MF 904 der Vianova Resins GmbH & Co. KG)
- 5: Beschleuniger ist ®Nacure 155 (Dinonylnaphthalin-disulfonsäure, 55 %ige Lösung in Isobutanol, King Industries)
- 6: entionisiertes Wasser, das zum Einstellen der Viskosität auf 120 mPa·s zugegeben wurde
- 7: Pendelhärte nach König

In Kombination mit geeigneten wasserlöslichen Melaminharzen und/oder blockierten Isocyanaten ergeben sich Einbrennlacke, die besonders geeignet sind als Füller für die Automobilindustrie.

### Prüfbleche für den Steinschlagtest

Prüfaufbau: Bonder 26 60 OC als Substrat, 25 µm einer üblichen ETL-Grundierung (eingebrannt bei 165 °C während 30 Minuten), 35 µm wäßrige Füller gemäß den Lacken 1 und 2 (Prüfblech 1 und 2) und wäßrige Füller gemäß den Lacken 4 und 5 (Prüfblech 3 und 4) der Tabelle 3 als Vergleich (jeweils eingebrannt bei 165 °C während 20 Minuten), darauf 40 µm handelsüblicher Melamin-gehärteter Acryl-Decklack (eingebrannt bei 140 °C während 30 Minuten)

Die so vorbereiteten Prüfbleche wurden 24 Stunden im Normklima gelagert und anschließend einem Steinschlagtest gemäß der VDA-Norm 621 - 487 unterzogen (2 Durchläufe mit jeweils 0,5 kg kantigem Beschußmaterial, Druck: 0,1 MPa (=1 bar)). Die in Tabelle 4 zusammengefaßten Steinschlag-Kennwerte zeigen, daß mit den Bindemittelmischungen gemäß der Erfindung durchwegs bessere Ergebnisse im Steinschlag erzielt wurden als bei den gleichen Bindemitteln ohne Zusatz der Hydroxyurethane als Zumischharze.

**Tabelle 4**

| **Steinschlagtest** | | | | |
|---|---|---|---|---|
| | Prüfblech 1 | Prüfblech 2 | Prüfblech 3 | Prüfblech 4 |
| Steinschlag-Kennwert | 0 bis 1 | 1 | 1 bis 2 | 2 bis 3 |

Bewertung gemäß der Norm:
- 0: kein Abplatzen des Decklacks vom Füller
- 10: vollständige Ablösung des Decklacks vom Füller

## Patentansprüche

1. Wäßrige Bindemittelmischungen, enthaltend ein wasserverdünnbares Harz und ein wassermischbares Hydroxyurethan, **dadurch gekennzeichnet, daß** das wasserverdünnbare Harz ausgewählt ist aus Polyestern, die durch Einbau von Bishydroxyalkylcarbonsäuren oder Polycarbonsäuren, deren Carboxylgruppen unterschiedliche Reaktivität bezüglich der Polykondensation aufweisen, anionisch modifiziert sind, Polyestern, die durch Cokondensation von höherfunktionellen Alkoholen und Säuren mit Funktionalität größer als 2 zugänglich sind, wobei die Säuren im Überschuß eingesetzt werden und Kondensationsprodukten **AB** von allein nicht wasserlöslichen Hydroxylgruppen-haltigen Harzen **B** und wasserlöslichen oder in Wasser dispergierbaren Säuregruppen-haltigen Harzen **A**, wobei die Harze **A** und **B** unabhängig voneinander aus den genannten Gruppen der Polyesterharze, Alkydharze, Polyurethanharze, Polyacrylatharze und Epoxidharze ausgewählt sind.

2. Wäßrige Bindemittelmischungen nach Anspruch 1, **dadurch gekennzeichnet, daß** als wasserverdünnbares Harz Kondensationsprodukte **AB** eingesetzt werden von allein nicht wasserlöslichen Hydroxylgruppen-haltigen Harzen **B** und wasserlöslichen oder in Wasser dispergierbaren Säuregruppen-haltigen Harzen **A**, wobei die Harze **A** und **B** unabhängig voneinander aus den genannten Gruppen der Polyesterharze, Alkydharze, Polyurethanharze, Polyacrylatharze und Epoxidharze ausgewählt sind.

3. Wäßrige Bindemittelmischungen nach Anspruch 1, **dadurch gekennzeichnet, daß** als wasserverdünnbare Harze verzweigte oder dendritische Moleküle mit Säuregruppen an den Enden der Zweige eingesetzt werden.

4. Wäßrige Bindemittelmischungen nach Anspruch 1, **dadurch gekennzeichnet, daß** der Massenanteil der wasserverdünnbaren Harze im Feststoff der Bindemittelmischung 95 bis 50 % beträgt, und der Massenanteil der Hydroxyurethane 5 bis 50 %, wobei sich die Massenanteile der beiden Komponenten zu 100 % ergänzen.

5. Wäßrige Bindemittelmischungen nach Anspruch 1, **dadurch gekennzeichnet, daß** als Hydroxyurethane Reaktionsprodukte von linearen, verzweigten oder cyclischen aliphatischen Cyclocarbonaten und primären Aminen eingesetzt werden.

6. Wäßrige Bindemittelmischungen nach Anspruch 5, **dadurch gekennzeichnet, daß** Monocarbonate verwendet werden.

7. Wäßrige Bindemittelmischungen nach Anspruch 5, **dadurch gekennzeichnet, daß** aliphatische diprimäre Amine verwendet werden.

8. Wäßrige Lacke, die wäßrige Bindemittelmischungen nach Anspruch 1 und Härter, die bei erhöhter Temperatur von über 80 °C wirksam werden, enthalten.

9. Wäßrige Lacke nach Anspruch 8 zur Verwendung als Füllerlacke für Automobile, die weiter einen Massenanteil von mindestens 15 % an Pigmenten enthalten.

## Claims

1. An aqueous binder mixture comprising a water-dilutable resin and a water-miscible hydroxy urethane, wherein the water-dilutable resin is selected from polyesters which have been anionically modified by incorporation of bishydroxyalkylcarboxylic acids or polycarboxylic acids whose carboxyl groups differ in their reactivity with respect to polycondensation; polyesters obtainable by cocondensing polyfunctional alcohols and acids with a functionality of more than 2, the acids being used in excess; and condensation products **AB** of hydroxyl-containing resins **B**, which on their own are not water-soluble, and water-soluble or water-dispersible resins **A** containing acid groups, the resins **A** and **B** being selected independently of one another from the stated groups of the polyester resins, alkyd resins, polyurethane resins, polyacrylate resins and epoxy resins.

2. The aqueous binder mixture as claimed in claim 1, wherein as water-dilutable resin use is made of condensation products **AB** of hydroxyl-containing resins **B** which on their own are not water-soluble, and water-soluble or water-dispersible resins **A** containing acid groups, the resins **A** and **B** being selected independently from one another from the stated groups of polyester resins, alkyd resins, polyurethane resins, polyacrylate resins and epoxy resins.

3. The aqueous binder mixture as claimed in claim 1, wherein as water-dilutable resins use is made of branched or dendritic molecules having acid groups at the ends of the branches.

4. The aqueous binder mixture as claimed in claim 1, wherein the mass fraction of the water-dilutable resins in the solids of the binder mixture is from 95 to 50% and the mass fraction of hydroxy urethanes is from 5 to 50%, the mass fractions of the two components adding up to 100%.

5. The aqueous binder mixture as claimed in claim 1, wherein as hydroxy urethanes use is made of reaction products of linear, branched or cyclic aliphatic cyclocarbonates and primary amines.

6. The aqueous binder mixture as claimed in claim 5, wherein monocarbonates are used.

7. The aqueous binder mixture as claimed in claim 5, wherein aliphatic diprimary amines are used.

8. An aqueous coating material comprising an aqueous binder mixture as claimed in claim 1 and curatives which become active at elevated temperatures of more than 80°C.

9. The aqueous coating material as claimed in claim 8 for use as a primer-surfacer material for automobiles, further comprising a mass fraction of at least 15% of pigments.

## Revendications

1. Mélanges aqueux de liants, contenant une résine diluable à l'eau et un hydroxyuréthanne miscible à l'eau, **caractérisés en ce que** la résine diluable à l'eau est choisie parmi les polyesters qui sont modifiés par incorporation d'acides bishydroxyalkylcarboxyliques ou d'acides polycarboxyliques dont les groupes carboxyle présentent des réactivités différentes par rapport à une polycondensation, les polyesters qui peuvent être obtenus par co-condensation d'alcools supérieurs et d'acides ayant une fonctionnalité supérieure à 2, les acides étant utilisés en excès, et les produits de condensation AB de résines B hydroxylées et solubles dans l'eau et de résines A contenant des groupes acides et solubles ou dispersibles dans l'eau, les résines A et B étant, indépendamment l'une de l'autre, choisies parmi les groupes mentionnés ci-dessus de résines de polyester, de résines alkydes, de résines de polyuréthanne, de résines de polyacrylate et de résines époxydiques.

2. Mélanges aqueux de liants selon la revendication 1, **caractérisé en ce que** l'on utilise en tant que résine diluable à l'eau des produits de condensation AB de résines B hydroxylées et solubles dans l'eau et de résines A contenant des groupes acides et solubles ou dispersibles dans l'eau, les résines A et B étant, indépendamment l'une de l'autre, choisies parmi les groupes mentionnés ci-dessus de résines de polyester, de résines alkydes, de résines de polyuréthanne, de résines de polyacrylate et de résines époxydiques.

3. Mélanges aqueux de liants selon la revendication 1, **caractérisé en ce que** l'on utilise en tant que résines diluables à l'eau des molécules ramifiées ou dendritiques comportant des groupes acides aux extrémités des ramifications.

4. Mélanges aqueux de liants selon la revendication 1, **caractérisés en ce que** la proportion en masse des résines diluables à l'eau, par rapport à l'extrait sec du mélange de liants, est de 95 à 50 %, et la proportion en masse des hydroxyuréthannes est de 5 à 50 %, la somme des proportions en masse des deux composants étant de 100 %.

5. Mélanges aqueux de liants selon la revendication 1, **caractérisés en ce que** l'on utilise en tant qu'hydroxyuréthannes des produits de la réaction de cyclocarbonates aliphatiques linéaires, ramifiés ou cycliques, et d'amines primaires.

6. Mélanges aqueux de liants selon la revendication 5, **caractérisés en ce que** l'on utilise des monocarbonates.

7. Mélanges aqueux de liants selon la revendication 5, **caractérisés en ce que** l'on utilise des amines aliphatiques diprimaires.

8. Vernis aqueux, qui contiennent des mélanges aqueux de liants selon la revendication 1 et des durcisseurs qui sont actifs à une haute température, supérieure à 80°C.

9. Vernis aqueux selon la revendication 8, pour utilisation en tant qu'apprêts garnissants pour carrosseries automobiles, qui contiennent en outre une proportion en masse de pigments d'au moins 15 %.
